Europäisches Patentamt

(19) European Patent Office

Office européen des brevets

(11) EP 0 826 481 A2

(12) EUROPEAN PATENT APPLICATION

(43) Date of publication:
04.03.1998 Bulletin 1998/10

(21) Application number: 97114785.5

(22) Date of filing: 26.08.1997

(51) Int. Cl.⁶: B29C 70/08, B29C 70/20, B29C 70/22, B29C 70/32, B29D 23/00, A01K 87/00

(84) Designated Contracting States:
AT BE CH DE DK ES FI FR GB GR IE IT LI LU MC NL PT SE
Designated Extension States:
AL LT LV RO SI

(30) Priority: 27.08.1996 JP 225146/96
28.09.1996 JP 277174/96
17.01.1997 JP 19898/97
31.03.1997 JP 80873/97
31.03.1997 JP 80911/97

(71) Applicant: DAIWA SEIKO INC.
Higashikurume-shi, Tokyo (JP)

(72) Inventors:
• Kurokawa, Toshihiro
Kodaira-shi, Tokyo (JP)

• Akutsu, Tetsuo
Higashimurayama-shi, Tokyo (JP)
• Nishikawa, Futoshi
Higashikurume-shi, Tokyo (JP)
• Suzue, Hiroyasu
Niiza-shi, Saitama (JP)
• Ohta, Isao
Higashikurume-shi, Tokyo (JP)
• Kosai, Hidenori
Higashikurume-shi, Tokyo (JP)
• Kato, Kenji
Hannou-shi, Saitama (JP)

(74) Representative:
Grünecker, Kinkeldey,
Stockmair & Schwanhäusser
Anwaltssozietät
Maximilianstrasse 58
80538 München (DE)

(54) **Pipe-shaped body**

(57) A pipe-shaped body is produced by a low-elasticity fiber reinforced prepreg formed of reinforcing fibers having a tensile elasticity modulus of 5 ton/mm² or less, preferably 2.5 tom/mm² or less, impregnated with synthetic resin and an another fiber reinforced pre-pregs formed of reinforcing fibers impregnated with synthetic resin.

FIG. 1

## Description

### BACKGROUND OF THE INVENTION

#### 1. Field of the Invention

The present invention relates to a pipe-shaped body which is used for a fishing rod or the like, in particular, which is composed of a plurality of prepreg sheets each formed of reinforcing fibers impregnated with synthetic resin.

#### 2. Description of the Related Art

Conventionally, as a pipe-shaped body such as a fishing rod or the like, there is used a pipe-shaped body which is obtained by winding fiber reinforced prepregs each formed of reinforcing fibers impregnated synthetic resin. However, such pipe-shaped body using the fiber reinforced prepregs is very high in rigidity and, for this reason, it is not suitable for a part which requires an easily flexible property. In order to satisfy the easily flexible property, it can be expected to use a synthetic resin sheet or the like which does not use the reinforcing fibers. However, the synthetic resin sheet is so low in strength that it can be easily broken when a load is applied thereto.

In addition, in such fiber reinforced prepreg, in order to meet requirements that the rod pipe is high in both elasticity and strength, the rod pipe does not cause a secular change in use for a long period of time, and the rod pipe has a pot life and a forming temperature which are convenient in manufacture, as the synthetic resin, there is used a so called high temperature setting type of thermosetting resin having a relatively high setting temperature, for example, in the range of 120 - 200 °C.

It is true that the thermosetting resin of a high temperature setting type is suitable for production of a rod pipe having high rigidity as well as high strength and specific strength but, because it hardens at high temperatures, such thermosetting resin provides a large difference between the temperature thereof used in winding (normal temperature) and the forming temperature thereof. For this reason, in a rod pipe which is formed of the fiber reinforced prepreg using the thermosetting resin of a high temperature setting type, there is a possibility that there can occur bending due to the influences of the reinforcing fibers such as the thermal expansion coefficient thereof and the like. This is a phenomenon which occurs conspicuously in a rod pipe having a relatively small outside diameter such as a top rod or the like. If the bending are produced in the rod pipe in this manner, then the bending have ill effects on the directional property of a fishing rod and cause the fishing rod to move unstably, thereby being unable to obtain a good condition or good flexibility.

Further, conventionally, if a fishing rod such as a lure rod or the like, which must be moved in a complicated manner in a fishing operation, is structured in such a manner that a fishing line is guided or inserted through the fishing rod, then the fishing line is hard to be twisted and thus the operation performance of the fishing rod can be improved.

However, when compared with other types of fishing rods, the pipe diameter of the intra-line fishing rod is increased because the fishing line is inserted through the rod pipe thereof. Therefore, in a short intra-line fishing rod such as a lure rod or the like, or in an intra-line fishing rod which includes a fishing line introduction part in the rear portion of the top rod thereof or the front portion of the supporting portion thereof, the portion of the fishing rod arranged in front of the fishing line introduction part, which requires flexibility, is worsened in flexibility, thereby worsening the operation performance of the fishing rod.

And further, the top rod of a fishing rod is required to be slender as well as so tenacious that it cannot be broken even if it is flexed to a great extent. Especially, in recent years, there has been used an intra-line fishing rod in which a fishing line is inserted through the interior portion of the fishing rod, because such fishing rod can prevent the fishing line from getting entangled. In the intra-line fishing rod, even a rod pipe having a small diameter for use as the top rod of such fishing rod is generally formed larger in outside diameter than other fishing rods than the intra-line fishing rod, because there must be secured in the interior portion of such small-diameter rod pipe a space to allow the fishing line to pass therethrough and also because the insertion resistance of the fishing line must be reduced.

However, if the outside diameter of the rod pipe is increased, then the flexural rigidity of the rod pipe is caused to increase accordingly, which makes it impossible to provide a fishing rod which can provide a delicate flexibility as well as can be flexed to a sufficient degree. In order to provide such delicate flexibility, if the rod is formed mainly of synthetic resin material having a low modulus of elasticity, or the thickness of the rod pipe is reduced simply, then the rod pipe is short of strength. Also, even if the rod pipe is structured in such a manner that layers of circumferential-direction reinforcing fibers are arranged inside and outside a layer of axial-direction reinforcing fibers, when such rod pipe is flexed greatly, especially, the outside layer of the circumferential-direction reinforcing fibers is elongated more greatly than the other layers, causing exfoliation to occur easily between the mutually adjoining circumferential-direction reinforcing fibers, which in turn causes the rod pipe to buckle into deformation, with the result that the rod pipe is easy to break.

Additionally, generally, a rod pipe for use in a fishing rod is produced in such a manner that one or more prepreg sheets are wound around a core metal having a tapered shape, they are heated, and then the core metal is removed. And, a fishing rod is structured by joining together a plurality of rod pipes each produced in the above-mentioned manner. In this case, for the prepreg sheets to be wound around the core metal, there have been employed various structures according to the uses of a fishing rod, the required properties of the fishing rod, locations in which the rod pipe is used, and the like. For example, with respect to the material of the reinforcing fibers to be used in the prepreg sheets, the quantity of impregnation of the resin of the prepreg sheets, the number of windings of the prepreg sheets wound around the metal core, the pile-up structures of a pipe-shaped body, and the like, conventionally, there have been proposed various structures.

By the way, when a prepreg sheet is wound around a core metal, there is used a prepreg sheet (which is also referred to as a main body prepreg) structured such that the number of windings thereof on the leading end side of a rod pipe is equal to the number of windings thereof on the base end side of the rod pipe. However, if the whole of a rod pipe is formed of the prepreg sheet having such structure, then the rigidity of the leading end side of the rod pipe may be too high and the rigidity of the base end side of the rod pipe may be too low, so that the rod pipe is unable to provide a desirable flexure property as a fishing rod. To avoid this, normally, the rod pipe for use in a fishing rod must be structured in such a manner that the rigidity thereof gradually decreases from the base end side thereof toward the leading end side thereof.

For this reason, as the prepreg sheet to be wound around the mandrel, besides the above-mentioned main body prepreg, there is also used a prepreg sheet (which is also referred to as an auxiliary prepreg) which is structured such that the number of windings thereof approaches zero as it goes toward the leading end side of the rod pipe. This auxiliary prepreg is normally formed in a triangular shape so that the number of windings thereof on the base end side of the rod pipe can be 1 to 2 and the number of windings thereof on the leading end side of the rod pipe can be substantially zero.

However, if the auxiliary prepreg having the above-mentioned structure is wound around the core metal together with the main body prepreg, then the resultant winding state provides a spiral shape, which produces a difference between the thicknesses of the rod pipe in the circumferential direction thereof. When the rod pipe has such thickness difference, the reinforcing fibers of the rod pipe can be curved when the rod pipe is cooled after it is formed by heating, with the result that the rod pipe itself can be curved in a bow shape or can be bent in part. In other words, since a temperature difference is produced between the heating and forming step of the rod pipe and the cooling step thereof, the resin of the rod pipe is thermally deformed (expanded) due to such temperature difference. That is, if the rod pipe has such thickness difference due to the above-mentioned spiral shape thereof, then there is produced a difference between internal stresses caused by the thermal deformation of the resin, causing the reinforcing fibers to be deformed easily, with the result that the rod pipe as a final product can be curved in a bow shape or bent in part. And, such curve and bend are easy to occur especially in a rod pipe having a small diameter such as a rod pipe used as a top rod or the like.

## SUMMARY OF THE INVENTION

The present invention aims at eliminating the above drawbacks found in the conventional pipe-shaped body, in particular, in the fishing rod. Accordingly, it is an object of the invention to provide a pipe-shaped body which is flexible and has a sufficient strength.

In attaining the above object, according to the invention, there is provided a pipe-shaped body includes a low-elasticity fiber reinforced prepreg formed of reinforcing fibers having a tensile elasticity modulus of 5 ton/mm$^2$ or less impregnated with synthetic resin.

Further, it is an another object of the invention to provide an intra-line fishing rod which is excellent in flexure balance and is easy to operate. Moreover, it is an another object of the invention to provide an intra-line fishing rod which can be stabilized and improved in strength.

In attaining the above object, according to the invention, there is provided a rod pipe for an intra-line fishing rod including a fishing line introduction part provided at a given position thereof, and at least three prepregs composed of reinforcing fibers impregnated with synthetic resin, the prepregs including a first prepreg wound from the substantially leading end thereof to the substantially rear end thereof, a second prepreg wound backward from the substantially leading end thereof, whose bending elastic modulus is lower than the first prepreg, and a third prepreg wound forward from the substantially rear end thereof, whose bending elastic modulus is higher than the first prepreg, wherein the rod pipe has a first area from the substantially leading end thereof to the fishing line introduction part, and the first area has a second area which a layer wound by the second prepreg is larger in thickness than a layer wound by the first prepreg which overlaps at the same position as the second prepreg and a third area which is other than the second area, and further wherein a length of the second area is set in the range of 30 - 70 % of the length of the first area; in the third area, the layer of the second prepreg substantially decreases backward from the leading end side of the third area and a layer of the third prepreg substantially increases backward from the leading end side of the third area, and the average thickness of the second area is set equal to or smaller than the average thickness of the third area.

Here, the term "bending elastic modulus of a prepreg" means bending rigidity per unit section area when the prepreg is bent in the longitudinal direction of a rod pipe.

Also, the term "substantially decrease" or "substantially increase" means that the layer of a prepreg is constant (including a zero state, that is, a state that the layer has disappeared), or if partially, reversely, the prepreg layer may increase (instead of decrease) or decrease (instead of increase).

In addition, it is an another object of the invention to provide a fishing rod which can prevent the occurrences of bending in a rod pipe, can reduce ill effects on the directional property and stable movement of the fishing rod to show excellent flexibility, and can provide excellent specific strength and rigidity.

That is, according to the invention, there is provided a rod pipe for fishing rod including a fiber reinforced prepreg formed of reinforcing fibers impregnated with synthetic resin having a setting temperature of 110°C or lower.

Further, it is an another object of the invention to provide an intra-line fishing rod including a tenacious rod top area which not only provides a delicate flexibility but also can be flexed greatly.

In attaining the above object, according to the invention, there is provided a rod pipe for an intra-line fishing rod wherein a rod top area which extends backward from a leading end of the rod pipe has a plurality of layers formed of reinforcing fibers impregnated with synthetic resin, and the reinforcing fibers of the each layer are directed in a direction having the larger angle with respect to an axial direction of the rod pipe than the reinforcing fibers of the inside layer of the each layer.

Also, according to the invention, there is provided a rod pipe for an intra-line fishing rod wherein a rod top area which extends backward from a leasing end of the rod pipe has at least three layers formed of reinforcing fibers impregnated with synthetic resin, and the reinforcing fibers of inside and outside layers which are wound on a inner and outer peripheries of the rod pipe are directed substantially in a circumferential direction of the rod pipe, and the reinforcing fibers of an intermediate layer arranged between the inside and outside layers are so directed as to cross each other in such directions that allow the reinforcing fibers to be substantially symmetrical to each other with respect to the axial direction of the rod and arranged in such quantity that allows the mutually crossing reinforcing fibers to be substantially equal in rigidity to each other.

Further, it is an another object of the invention to provide a rod pipe for use in a fishing rod in which the above-mentioned curve and bend are hard to occur when the rod pipe is formed.

In attaining the above object, according to the invention, there is provided a rod pipe for a fishing rod including a plurality of prepreg sheets each formed of reinforcing fibers impregnated with synthetic resin, wherein the plurality of prepreg sheets include one set of substantially right-triangle-shaped auxiliary prepreg sheets, and further wherein the one set of auxiliary prepreg sheets are structured in such a manner that the inclined portions thereof are disposed opposed to each other and the auxiliary prepreg sheets are wound in such a manner that the auxiliary prepreg sheets provide respective spiral shapes extending in the mutually opposite direction.

## BRIEF DESCRIPTION OF THE DRAWINGS

Fig. 1 is a view of the structures of prepregs to be wound around a mandrel when a pipe-shaped body according to the invention is manufactured;

Fig. 2 is a section view of a pipe-shaped body according to the invention;

Fig. 3 is a side view of a second embodiment of a fishing rod according to the invention;

Fig. 4 is a view of a concrete example of the length of the rod pipe shown in Fig. 3;

Fig. 5 is a view to explain a method for manufacturing the rod pipe shown in Fig. 3;

Fig. 6 is a side view of a third embodiment of a fishing rod according to the invention;

Fig. 7 is a front view of an embodiment of a rod pipe in a fishing rod according to the invention;

Fig. 8 is a section view of the rod pipe, taken along the line I-I shown in Fig. 7;

Fig. 9 is an explanatory view of a method for manufacturing a fishing rod according to the invention;

Fig. 10 is a partial view of an embodiment of an intra-line fishing rod according to the invention;

Fig. 11 is a transverse section view, taken along the arrow line II-II shown in Fig. 10;

Fig. 12 is a transverse section view of a modification of Fig. 11.

Fig. 13 is a view of a sixth embodiment of a rod pipe for use in a fishing rod according to the invention, showing an arrangement structure of prepreg sheets to be wound around a mandrel;

Fig. 14 is a view of the structure of a rod pipe to be formed according to the arrangement structure of the prepreg sheets shown in Fig. 13;

Fig. 15 is a view of a seventh embodiment of a rod pipe for use in a fishing rod according to the invention, showing an arrangement structure of prepreg sheets to be wound around a mandrel; and,

Fig. 16 is a view of an eighth embodiment of a rod pipe for use in a fishing rod according to the invention, showing an arrangement structure of prepreg sheets to be wound around a mandrel.

## DETAILED DESCRIPTION OF THE PREFERRED EMBODIMENTS

⟨First Embodiment⟩

Now, description will be given below in concrete of an embodiment of a pipe-shaped body according to the invention with reference to the accompanying drawing.

The pipe-shaped body according to the illustrated embodiment of the invention comprises a fiber reinforced prepreg and a low-elasticity fiber reinforced prepreg including reinforcing fibers (low-elasticity fibers) having a tensile elasticity modulus of 0.5 - 5 ton/mm$^2$.

As the material of the reinforcing fibers having a tensile elasticity modulus of 0.5 - 5 ton/mm$^2$ included in the low-elasticity fiber reinforced prepreg, there are available acrylic resin, rayon resin, pitch material, and the like. Especially, it is preferred to use acrylic resin fibers including low-elasticity reinforcing fibers which have a specific gravity of 1.5 g/cm$^3$.

As the reinforcing fiber of a fiber reinforced prepreg, there can be used a carbon fiber, a glass fiber, an aramid fiber, a silicon carbide fiber, or the like. Also, as synthetic resin to be used for a low-elasticity fiber reinforced prepreg and a fiber reinforced prepreg, there can be used thermosetting resin such as epoxy resin or the like, and thermoplastic resin such as polyether imido resin or the like.

When taking it into consideration that the low-elasticity fiber reinforced prepreg is used in the top end portion of a fishing rod, the thickness of the low-elasticity fiber reinforced prepreg is preferably 0.08 mm or less, more preferably, 0.05 mm or less. Use of the low-elasticity fiber reinforced prepreg having such thickness can reduce variations in the thickness of a pipe-shaped body.

When the elasticity, strength and reduction in weight of a composite member (a pipe-shaped body) are taken into account, the quantity of the low-elasticity fibers of the low-elasticity fiber reinforced prepreg is preferably 30 % by weight or more, more preferably, 60 % by weight or more. With use of the low-elasticity fiber reinforced prepreg including such low-elasticity fibers, it is possible to provide a pipe-shaped body which is light in weight, has a low elasticity, is hard to break even when it is caused to flex greatly, and is improved in strength.

The quantity of the resin impregnation of the low-elasticity fiber reinforced prepreg is preferably 25 % by weight or more when the elasticity, strength and weight of the composite member are taken into account. By using the low-elasticity fiber reinforced prepreg containing such low-elasticity fiber quantity, not only the light weight and low elasticity can be provided but also the necessary strength can be maintained. In order to decrease the elasticity of the composite member as well as to enhance the close contact property thereof with respect to a mandrel or the like, the resin impregnation quantity is preferably 40 % by weight or more, more preferably, in the range of 50 - 80 %.

Special limit is not given to the direction of the low-elasticity fibers of the low-elasticity fiber reinforced prepreg. That is, in the pipe-shaped body, the direction of the low-elasticity fibers may extend in the axial direction of the pipe-shaped body, or may extend in the peripheral direction thereof, or may be inclined at a given angle, for example, ± of 45°C from the axial direction thereof.

As the shape of the low-elasticity fiber reinforced prepreg, there are available a tape-like shape, a sheet-like shape and the like.

There is no special limit to the number of windings of the low-elasticity fiber reinforced prepreg, but the winding number thereof can be made to vary variously according to the fields of uses, required properties and the like. However, when the rigidity, strength and holding weight of the pipe-shaped body are taken into consideration, the winding number may be preferably in the range of 1 to 6. If the low-elasticity fiber reinforced prepreg is wound by such winding number, then not only the strength stability of the pipe-shaped body but also the flexibility thereof can be improved.

According to the illustrated embodiment, the pipe-shaped body is composed of the low-elasticity fiber reinforced prepreg and fiber reinforced prepreg. However, this is not limitative but, according to the invention, the pipe-shaped body may also be composed of only the low-elasticity fiber reinforced prepreg.

Further, there is no special limit to the thickness of the fiber reinforced prepreg, the quantity of fibers thereof, the resin impregnation quantity thereof, and the like. However, referring to its relation to the low-elasticity fiber reinforced prepreg, in consideration of the rigidity of the composite member, the thickness of the fiber reinforced prepreg may be preferably 1/2 - 1/10 times that of the low-elasticity fiber reinforced prepreg; the fiber quantity of the fiber reinforced prepreg may be preferably 1/2 - 1/10 times that of the low-elasticity fiber reinforced prepreg in consideration of the thickness variations and rigidity of the composite member; and, the resin impregnation quantity of the fiber reinforced prepreg may be preferably 1/2 - 1/10 times that of the low-elasticity fiber reinforced prepreg in consideration of the strength and rigidity of the composite member.

According to the invention, when the low-elasticity fiber reinforced prepreg is used to form, for example, a pipe-shaped body for a fishing rod, there are available the following examples:

(1) A fishing rod which, in at least one of the outer layer, middle layer and inner layer of a rod pipe, uses a sheet-like low-elasticity fiber reinforced prepreg, or a wide and thin tape-like low-elasticity fiber reinforced prepreg having a width of the order of 5 - 10 mm and a thickness of the order of 0.01 - 0.03 mm.

The present fishing rod provides a flexible body and has such a strength that it cannot be broken even if it is flexed. Also, the low-elasticity fiber of the fishing rod has a ductility of about 2 % which is approximate to the ductility of the synthetic resin included in the prepreg, which prevents the low-elasticity fibers from peeling off from the synthetic resin.

(2) A fishing rod which uses a sheet- or tape-like low-elasticity fiber reinforced prepreg including low-elasticity fibers having a specific gravity of 1.5

g/cm$^3$.

The present fishing rod provides a flexible body and is light in weight, which allows an angler to hold the same lightly.

(3) A fishing rod which includes a low-elasticity fiber reinforced prepreg wound by one or more layers (one or more windings) around the outer-most layer of a rod pipe or in the neighborhood of the rod pipe outer-most layer over a given length (for example, about 50 % of the entire length of the rod pipe).

And, the present fishing rod is able to absorb shocks given thereto from outside by means of the low-elasticity fiber reinforced prepreg which forms the outer-most layer of the rod, thereby being able to protect the fiber reinforced prepreg forming the inner layer of the rod. Also, the present outer-most layer of the rod is higher in strength than a protection layer which is formed of only the synthetic resin, so that the outer-most layer can stand the shocks applied thereto from outside.

(4) A fishing rod in which a low-elasticity fiber reinforced prepreg is provided in a relatively large amount in the top end portion of the rod pipe of a top rod thereof, whereas the low-elasticity fiber reinforced prepreg is not provided or is provided in a low ratio in the remaining portions thereof.

This fishing rod is easy to flex at the leading end portion of the top rod thereof and is thus easy to have a strike. Also, in an intra-line fishing rod, since a low-elasticity fiber is used, even when the inside diameter of the top end portion of the rod is set large, the present fishing rod is capable of showing a soft flexibility similar to other soft-flexibility and fine fishing rods than the intra-line fishing rod. Further, in the present fishing rod, because the inside diameter of the top end portion thereof can be set large, the resistance of a fishing line to be inserted through the rod pipe can be reduced.

(5) A fishing rod produced by winding a sheet-shaped low-elasticity fiber reinforced prepreg in which reinforcing fibers are arranged in one direction.

In this fishing rod, by winding the sheet-shaped low-elasticity fiber reinforced prepreg, the layers of the rod can be superimposed on top of each other with a uniform thickness, thereby preventing variations in the thickness which would occur when a pipe-shaped body is formed of only the resin. Thanks to this, even if a low-elasticity fiber is used, the strength of the rod can be enhanced, which makes it possible to provide a homogeneous pipe-shaped body.

(6) A fishing rod produced by winding at least one layer of low-elasticity fiber reinforced prepreg having a tensile elastic modulus of 0.5 - 5 ton/mm$^2$, preferably, 0.5 - 2.5 ton/mm$^2$. Especially, a fishing rod in which the above-mentioned low-elasticity fiber reinforced prepreg is used in the rod pipe of the top rod thereof.

This fishing rod is easy to flex and is excellent in flexibility. Also, since the fibers are present as reinforcing material when compared with a pipe-shaped body which is formed of only the resin, even if the fibers are low in elasticity, the fibers are able to contribute to the enhancement of the strength of the rod pipe, so that the strength of the fishing rod as a product can be stabilized.

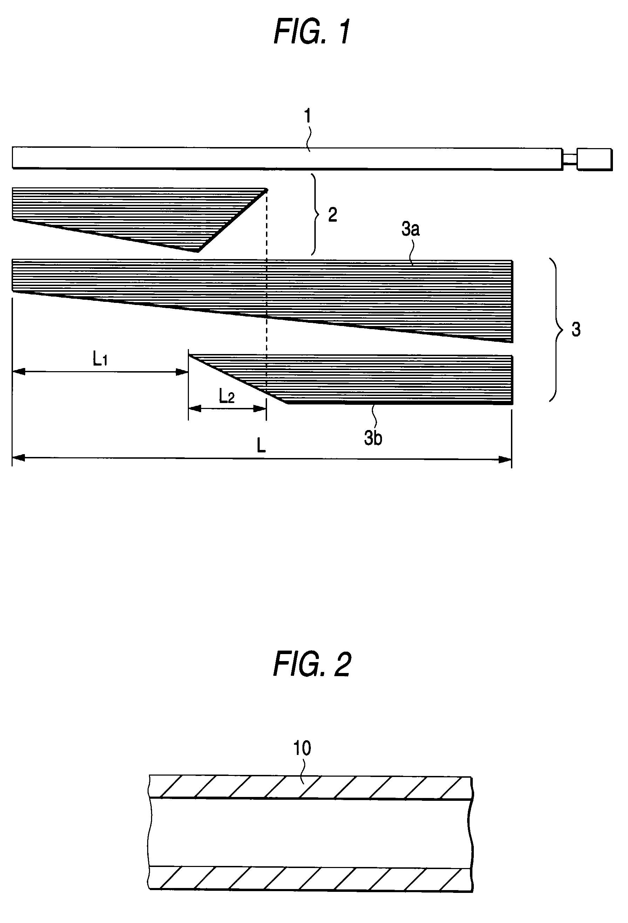

According to the invention, a low-elasticity fiber reinforced prepreg 2 and a fiber reinforced prepreg 3 (3a, 3b) are wound sequentially and separately around a mandrel 1 to thereby form a primary assembly, which are respectively shown in Fig. 1, or the mutually adjoining fiber reinforced prepregs are properly superimposed on top of each other and the superimposed body is then wound around the mandrel 1 to thereby form a primary assembly, and, after then, there is carried out an ordinary processing comprising the steps of tightening the primary assembly with tape, heating and hardening the tape-tightened assembly, removing the mandrel 1 from the assembly, removing the tape from the assembly, grinding the assembly, and the like, so that a pipe-shaped body shown in Fig. 2 according to the invention can be manufactured.

In this case, the ratio of the low-elasticity fibers in the pipe shaped body in the top portion of the rod may be 50% or more, preferably, in the range of 65% - 95%. And, the ratio of the thickness of the low-elasticity fibers in the pipe-shaped body in the top portion of the rod may also be 50% or more, preferably, in the range of 65% - 95%. Further, the amount of the resin impregnation of the low-elasticity fiber reinforced prepreg 2 may be preferably larger than that of the fiber reinforced prepreg 3. Due to such regulations, it is possible to obtain a pipe-shaped body which is soft in the top portion thereof, hard in the base portion thereof, and provides a large difference in rigidity between the top and base portions thereof.

Also, in the fiber reinforced prepregs shown in Fig. 1, when the length of the fiber reinforced prepreg 3a corresponding to the whole length of the pipe-shaped body is expressed as L, $L_1$ may be preferably in the range of 10 - 45% of L, and $L_2$ may be preferably in the range of 10 - 35%.

In the above-mentioned embodiment, the pipe-shaped body according to the invention is applied to a fishing rod. However, this is not limitative, that is, the pipe-shaped body according to the invention can also be applied effectively to other uses, such as a golf club, a tennis racket, a badminton racket, a ski pole, a bicycle frame and the like.

〈Second Embodiment〉

Now, description will be given below in more detail of the invention by means of second and third embodiments thereof respectively shown in the accompanying drawings.

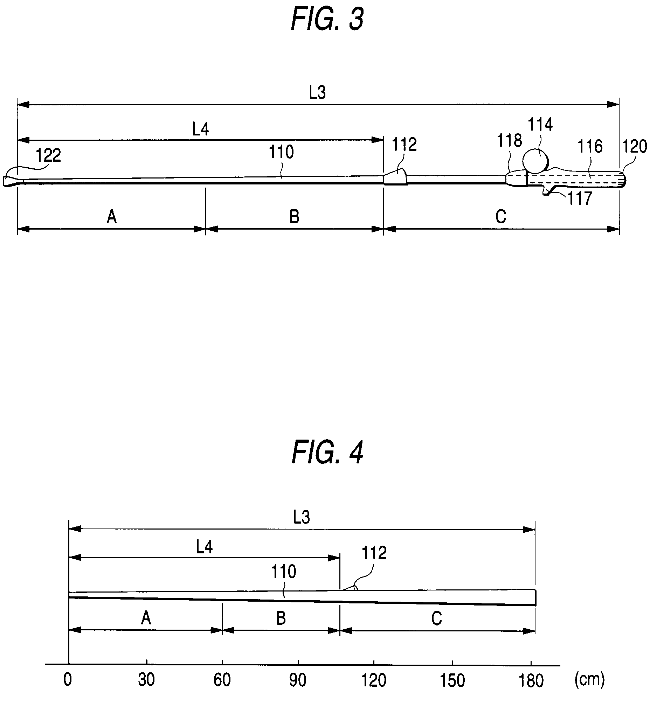

In Fig. 3, there is shown a lure rod as an example of an intra-line fishing rod according to the invention. A rod pipe 110 is a single rod including an inner surface so formed as to have a constant taper ranging from the substantially leading end thereof to the substantially trailing end thereof. The rod pipe 110 has a length of L3. The rod pipe 110 includes a fishing line introduction part 112 which is formed at a position spaced by a length of L4 apart from the leading end of the rod pipe 110, while a top guide 122 is threadedly mounted on the leading end of the rod pipe 110. A grip 116 with a trigger 117 on the lower side thereof is fitted with the outer surface of the rear portion of the rod pipe 110 and, on the front portion of the grip 116, there is disposed a reel fixing device 118 which is used to mount a dual bearing type reel 114 onto the grip 116. And, a bottom plug part 120 is threadedly mounted on the rear end of the rod pipe 110.

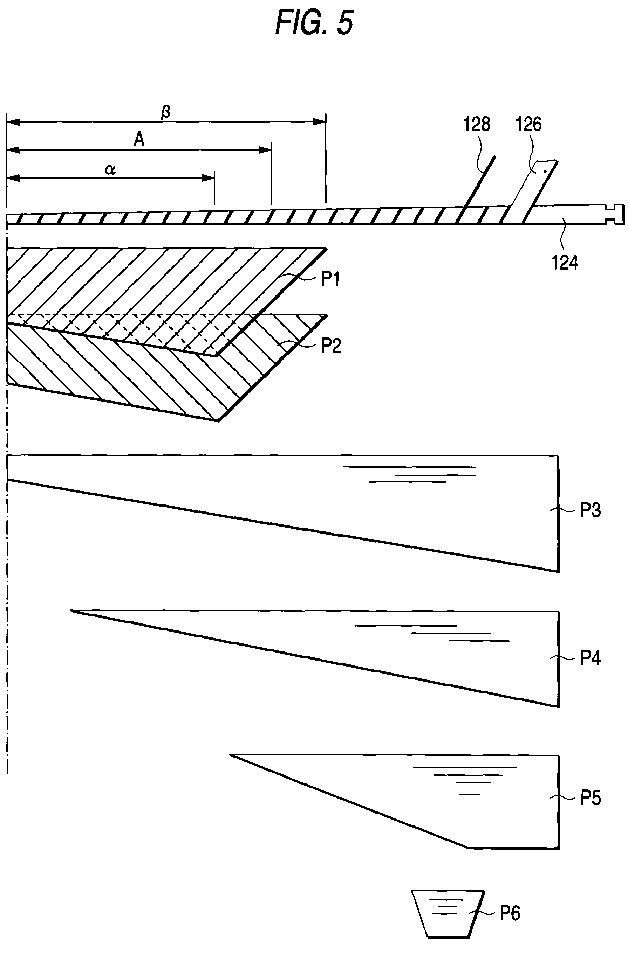

In Fig. 3, an area A having a given length from the leading end of the rod pipe 110 is a highly flexible area, the remaining area B up to the fishing line introduction position of the rod pipe 10 is higher in bending rigidity than the area A, and an area C extending backwardly from the fishing line introduction part is further higher in rigidity than the area B. Here, the high rigidity area C is formed shorter than the length L2. Now, Fig. 5 is a view to explain a method for manufacturing the present rod pipe 110. In Fig. 5, a mandrel 124 is formed in a tapered manner, while the rate of taper of the mandrel 124 may be preferably selected from a taper rate range of approx. 2/1000 - 6/1000. Also, when the taper of the mandrel 124 varies at an intermediate position, a difference between the taper rates may be in the range of 2/1000 - 3/1000 or less. A thick heat resisting tape 126 is wound around the mandrel 124 at given intervals. And, a guide member 128, in which fibers are directed substantially in the longitudinal direction thereof to thereby provide a string-like shape, is wound around the mandrel 124 along such intervals. After then, six pieces of prepregs P1 - P6 respectively having the following forms are further wound around the mandrel 124 and these elements are then pressurized and heated for formation. After such formation, the mandrel 124 and tape 126 are removed. Here, the rod pipe 110 is formed such that the diameter of the inside of the leading end thereof is 1.5 mm or more.

More preferably, there may be firstly wound the square shaped, low bending elasticity prepreg P1 in which reinforcing fibers are oriented in a direction inclined at angles in the range of 15 - 75 degrees with respect to the axial direction of the mandrel 124, and, on top of the prepreg P1, there may be wound the low bending elasticity prepreg P2 in which reinforcing fibers are so oriented as to be inclined with respect to the axial direction of the mandrel 124 so that the present reinforcing fibers are inclined in a direction substantially symmetrical to the reinforcing fibers of the prepreg P1; or, these two prepregs P1 and P2 may be superimposed on top of each other and then may be wound together around the mandrel 124. The widths of the two prepregs P1 and P2 are set such that the top portions thereof increase gradually up to a position of a distance $\alpha$ from the leading ends thereof and, after then, decrease gradually down to a position of a distance $\beta$ to disappear. On the thus wound prepregs P1 and P2, there is wound the trapezoidal, main body prepreg P3 which has a length substantially equal to the whole length of the rod pipe 110 and also in which main reinforcing fibers are so directed as to extend along the axial direction of the mandrel 124.

Further, on top of the main body prepreg P3, there is wound the right-triangular-shaped auxiliary prepreg P4 in which main reinforcing fibers are so directed as to extend along the axial direction of the mandrel 124, that is, the prepreg P4 is wound backwardly starting at a position which is spaced slightly backwardly from the leading end of the rod pipe 110. Further, on top of the prepreg P4, there is wound the trapezoidal auxiliary prepreg P5 in which main reinforcing fibers are so directed as to extend along the longitudinal direction of the mandrel 124, in such a manner that the winding of the prepreg P5 starts at a position which is located further backwardly of the start position of the winding of the prepreg P4. Still further, at a position where a hole for the fishing line introduction part 112, there is wound the trapezoidal reinforcing prepreg P6 in which main reinforcing fibers are so directed as to extend along the axial direction of the mandrel 124.

As the reinforcing fibers of the prepregs P1 - P3, there may be used reinforcing fibers of the same kind, for example, carbon fibers having almost the same modulus of elasticity, and the prepregs P1 and P2 may use reinforcing fibers which are lower in elasticity than the reinforcing fibers of the main body prepreg P3. If the prepregs P4 and P5 use reinforcing fibers higher in elasticity than the reinforcing fibers of the main body prepreg P3, then there can be obtained an efficient reinforcing effect. However, this is not limitative. Since the prepreg P6 is used to reinforce the hole for the fishing line introduction part 112, highly elastic fibers may be used. However, even when there are used reinforcing fibers having a high modulus of elasticity, the bending elasticity of the prepreg can be reduced by inclining the reinforcing fibers with respect to the axial direction of the rod pipe. For this reason, highly elastic fibers may be used for the prepregs P1 and P2, and fibers having a low elasticity of the order of 15 ton/mm$^2$ or less may be used for the main body prepreg P3.

The bending elasticity of the prepregs in the axial direction of the rod pipe are preferable to be respectively 1 - 26 ton/mm$^2$ in the prepreg P1 and P2, 10 - 40 ton/mm$^2$ in the prepreg P3, 20 - 60 ton/mm$^2$ in the prepreg P4 and P5, 20 - 40 ton/mm$^2$ in the prepreg P6. The average synthetic resin impregnation amount of the prepregs P1 and P2 are preferably set higher than that of the prepreg P3 - P5.

The widths of the prepregs P1 and P2 having a low elastic modulus, during the length $\alpha$, increase gradually in such a manner that the number of windings thereof increases from the respective leading sides of the prepregs P1 and P2 toward the respective base sides thereof and, after then, decrease gradually up to the position of the length $\beta$ from the leading ends of the prepregs, while the main body prepreg P3 also increases gradually in width in such a manner that the number of windings thereof increases as it goes backwardly. Therefore, up to a position (for example, between the distances $\alpha$ and $\beta$) of a given distance A from the leading ends of the prepregs, the number of windings of the low elasticity modulus prepregs are greater than that of the main prepreg so that the low elasticity modulus prepregs can be larger in the layer thickness than the main body prepreg. In the areas of the prepregs existing backwardly of the position of the given distance A, since the low elasticity modulus prepregs are cut in an inclined manner, the layer thicknesses of the low elasticity modulus prepregs decrease gradually to disappear in the end, whereas the layer thickness of the main body prepreg P3 increases. After then, on top of the main body prepreg P3, there are wound around the above-mentioned auxiliary prepregs P4 and P5, thereby increasing the rigidity of the present structure. As a result that the auxiliary prepregs P4 and P5 are wound, the average thickness of the remaining area B is equal to or larger than the average thickness of the highly flexible area A. Therefore, the area A is the most flexible area, the remaining area B up to the position of the fishing line introduction part shown in Fig. 1 is higher in bending rigidity than the area A, and the area C situated backwardly of the fishing line introduction part is further higher in bending rigidity than the area B. Preferably, in the area C, the number of windings of the high bending elastic modulus prepreg may be greater than the layer of the main body prepreg, or, the area C may be larger in thickness than the layer of the main body prepreg.

The distance A may be set in the range of approx. 30 - approx. 70% with respect to the length L4 and, in particular, the distance A is set substantially for 30 - 90 cm. The concrete relation between the lengths of the present structure is shown in Fig. 2. That is, the whole length of the rod pipe, L3, is 180 cm, the length L4 of the area existing forwardly of the fishing line introduction part 112 is 105 cm, the length A is 60 cm (= 0.57 x L4), the length B is 45 cm, the length C is 75 cm, and A > B, L4 = A + B > C. The thickness of the prepregs P1, P2 used is of the order of 33 microns, the thickness of the prepregs P3, P4 is of the order of 77 microns, and the thickness of the prepreg P5 is of the order of 125 microns. And, referring to the number of windings at the position of the leading end of the rod pipe, the number of windings of each of the prepregs P1, P2 is approx. 3, and the number of windings of the prepreg P3 is approx. 1; and, at the position of the distance $\alpha$ from the leading

end of the rod pipe, the number of windings of each of the prepregs P1, P2 is approx. 4, the number of windings of the prepreg P3 is approx. 1.4, and that of the prepreg P4 is approx. 1. If it is assumed that the thickness of the central position of the area A is used as the average thickness of the area A, then the thickness of the area A is 0.55 mm and the thickness of the central position of the area B is 0.65 mm, that is, the thickness of the area B is larger than that of the area A.

For the low bending elastic modulus prepregs P1 and P2, there are used prepregs having a bending elastic modulus which is 70% or less, preferably, 50% or less when compared with the bending elastic modulus of the main body prepreg P3. Also, when the thickness of the structure is increased in such a manner that the number of windings of the low bending elastic modulus prepregs is set larger than that of the main body prepreg, by using a prepreg which is thinner in thickness than the main body prepreg, even if the number of windings deviates from an integer value, the bias of the rigidity due to such deviation decreases according to the thinness of the prepreg, with the result that there can be provided an excellent rod pipe which is little biased in rigidity in a highly flexible area thereof.

Now, according to the present embodiment, a spirally-shaped and inwardly projecting fishing line guide is integrated into the inner surface of the rod pipe by the guide member 128. The fishing line guide may be formed over the whole of the rod pipe 110, or may be formed only in the portion of the rod pipe that exists forwardly of the fishing line introduction part 112, or may be formed only in the highly flexible area of the forward portion of the rod pipe, or may not be formed at all.

Also, the low bending elastic modulus prepregs may be wound around on the outside of the main body prepreg, or may be wound around on the outside of the auxiliary prepreg P4.

The auxiliary prepregs P4 and P5, preferably, may not be wound around the given area of the front portion of the rod pipe but may be set in such a manner that the leading ends thereof are situated in the range of approx. 50 - 100% of the length $\alpha$ from the leading end of the rod pipe. Normally, the auxiliary prepregs use a prepreg having a higher bending elastic modulus than the main body prepreg to thereby increase the rigidity of the base side of the rod pipe with high efficiency. However, this is not limitative but the auxiliary prepregs may use a prepreg having the same bending elastic modulus as the main body prepreg. In the foregoing description, there are used a plurality of prepregs as the auxiliary prepregs. However, the invention is not limited to this structure but, in order to be able to secure a given rigidity balance with use of a single prepreg, the cut pattern of the prepreg may also be adjusted.

The reinforcing prepreg P6 is wound around the portion of the rod pipe where the hole for the fishing line introduction part is formed. Although the fibers of the reinforcing prepreg P6 consist mainly of fibers extending in the axial direction of the prepreg 6, preferably, fibers extending in the peripheral direction thereof or woven cloth may be arranged in part to thereby prevent the prepreg P6 against tear or breakage when the hole for the fishing line introduction part is formed. Also, due to formation of the hole, the corresponding portion of the rod pipe is lowered in strength and rigidity. However, the lowered strength and rigidity can be reinforced by use of axially extending fibers having a modulus of elasticity equal to or higher than that of the main body prepreg.

Referring here to the structure of the inner surface of the rod pipe, although it may be unavoidable that the component mounting portions (in the range of 5 - 20 cm from the respective ends of the rod pipe) of the front and rear end portions thereof have different tapers, preferably, the whole area of the rod pipe inner surface or the other areas thereof than the end portions may be so formed as to have a constant taper in the previously described range. No change in the taper of the rod pipe inner surface can prevent the reinforcing fibers from meandering, which in turn can stabilize the strength of the rod pipe. Especially, when the fishing line guide is projectingly provided in the interior of the rod pipe, stresses are concentrated onto the area of the main body layer of the rod pipe that exists in the periphery of the fishing line guide. However, if the taper is constant, then it is possible to prevent the reinforcing fibers from being disarrayed in such area, thereby being able to stabilize the strength of the rod pipe accordingly.

In the foregoing description, the fishing rod is formed of a single rod pipe. However, the above-mentioned structure can also apply similarly to a jointed fishing rod in which two rod pipes are jointed to each other in the neighborhood of a fishing line introduction part.

〈Third Embodiment〉

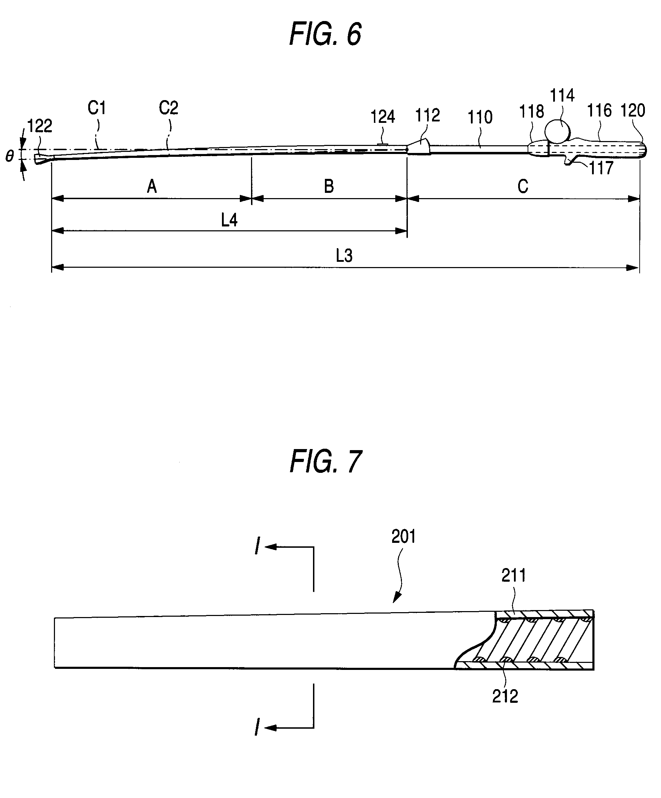

Now, Fig. 6 shows an intra-line fishing rod of a third embodiment according to the invention. In the present embodiment, a fishing rod is composed of a jointed fishing rod but the fishing rod may also be a single rod pipe. In Fig. 6, the same parts as those shown in Fig. 3 are given the same designations and thus the description thereof is omitted here. In Fig. 6, reference character 124 designates a mark which can be used for a jointing operation to be performed when a jointed fishing rod is used, so that the rod pipes of the jointed fishing rod can be arranged in a correct direction when they are jointed to each other. Therefore, when the fishing rod is composed of a single rod pipe, of course, there is no need for provision of this mark 124. The forward portion of the rod pipe 110 (that is, a portion including the highly flexible area A and the front portion of its remaining area B) is slightly bent on the opposite side of the dual bearing type reel 114 side with respect to a line C1 which is the extension of the axial line of the high rigidity area C. An angle θ, which is formed between the line C1 and a line C2 connected from the fishing line introduction part 112 as a basic point to the position of the center of the leading end of a top guide 122, may be 3 degrees or less, preferably, 2 degrees or less. In other words, a distance between the line C1 and the central position of the leading end of the top guide 122 may be set in the range of approx. 5 mm - approx. 50 mm, preferably, in the range of 10 - 30 mm.

The above-mentioned bending amount does not include the amount of flexure of the fishing rod due to gravitation. Also, the above-mentioned structure relates to a fishing rod in which a dual bearing type reel is mounted on the upper side of the fishing rod. On the other hand, in a fishing rod in which a spinning reel or the like is mounted on the lower side of the fishing rod, the forward portion of the fishing rod is similarly bent downwardly (toward the spinning reel mounting side), and the fishing line introduction part 112 is also provided on the lower side of the fishing rod. Further, the above-mentioned respective areas A, B and C in connection with the manufacturing state of the rod pipe shown in Fig. 6 are similar to those which were described above in connection with the manufacturing state shown in Fig. 3.

As described above, if the forward portion of the fishing rod is bent downwardly to a slight extent, then the center of gravity of the fishing rod is positioned slightly downward of the line C1. Due to this, in a state in which an angler holds the grip 116 with the fishing line hanging down, the fishing rod can be prevented from moving in the rotational direction, thereby allowing the angler to hold the fishing rod in a stable manner, so that the fishing rod is easy to operate. Also, since the fishing rod forward portion is slightly bent mainly in the highly flexible area A thereof, when the fishing rod is handled dynamically as in a casting operation including a twisted casting operation and the like, the present fishing rod can be handled similarly to an ordinary straight fishing rod as in Fig. 3, in view of the fact that even such ordinary straight fishing rod as shown in Fig. 3 can be bent in the forward portion thereof due to the flexibility thereof when it is casted. That is, the present fishing rod is capable of dealing with various ways of casting without lowering the casting performance thereof, which leads to the improved operation performance.

As can be seen clearly from the foregoing description, according to the second and third embodiments of the invention, a highly flexible area having a rod top side length in the range of approx. 30 - approx. 70% is formed such that the winding layer of the prepreg having a low bending elastic modulus is thicker than the winding layer of the main body prepreg, while the average thickness of the remaining area is equal to or larger than the average thickness of the highly flexible area. Also, in the remaining area, the layer of the prepreg having a low bending elastic modulus substantially decreases, whereas the layer of the prepreg having a high bending elastic modulus substantially increases. Therefore, even if the forward portion of the fishing rod is so formed as to have a given diameter, the bending rigidity of the forward portion of the fishing rod can be set lower to a desired degree than that of the rearward portion thereof. Thanks to this, the invention can provide an intra-line fishing rod which is excellent in flexure balance and is easy to operate.

⟨Fourth Embodiment⟩

Now, description will be given below in detail of a fishing rod of a fourth embodiment according to the invention with reference to the accompanying drawings.

A fishing rod according to the invention has a rod pipe which is produced by winding, as a main body layer thereof, a fiber reinforced prepreg formed of properly arranged reinforcing fibers impregnated synthetic resin having a setting temperature of 110°C or lower.

This rod pipe is used as a rod pipe having a relatively small outside diameter, for example, a rod pipe having a leading end outside diameter of about 5 mm or lower. Therefore, in a fishing rod such as a mountain stream fishing rod which is composed of 10 or more pieces of rod pipes, for example, a fiber reinforced prepreg including thermosetting resin of a low temperature setting type should be used in the first and second rod pipes from the rod top side. Also, in a fishing rod composed of a single rod pipe, the area of the single fishing rod lying in the range of approx. 15 - 30% of the whole length from the rod top side should be composed of a fiber reinforced prepreg including thermosetting resin of a low temperature setting type.

On the other hand, the other remaining portions of the single rod pipe as well as the remaining rod pipes (of a middle rod and a base rod) each having a leading end outside diameter of approx. 10 mm or larger are formed of a fiber reinforced prepreg including a high temperature setting type of thermosetting resin (having a setting temperature of 120 - 200 °C).

Now, Fig. 7 is a front view of an embodiment of a rod pipe for use in a fishing rod according to the invention. In Fig. 7, reference character 201 designates a rod pipe. This rod pipe 201 includes mainly of a main body layer 211 produced by winding a fiber reinforced prepreg including a low temperature setting type of thermosetting resin, and a fishing line guide 212 formed in a spiral shape on the inner wall surface of the rod pipe 201, while the fishing line guide 212 is so structured as to project out from the inner wall surface of the rod pipe 201 into the hollow portion of the rod pipe 201.

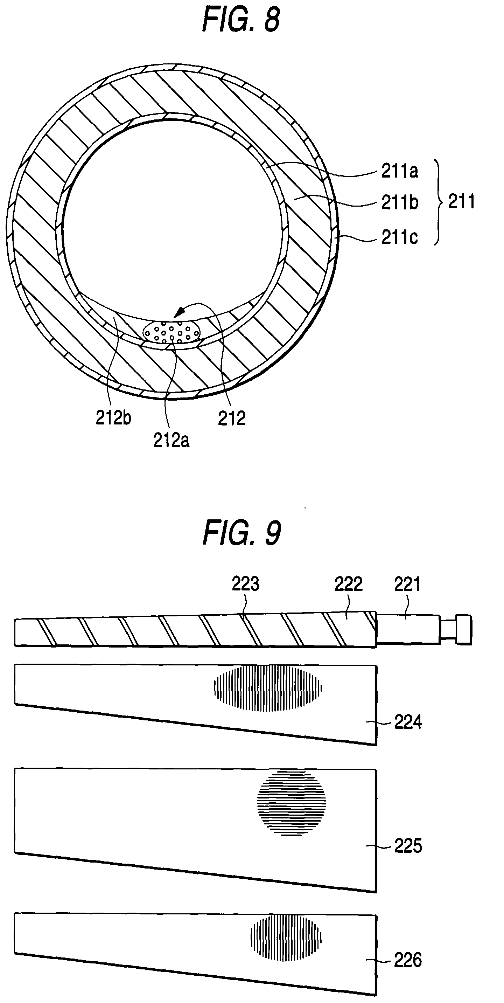

As shown in Fig. 8, the main body layer 211 includes an inside layer 211a formed of a fiber reinforced prepreg (a circumferential fiber prepreg) in which reinforcing fibers are arranged in the circumferential direction of the rod pipe 201, an intermediate layer 211b disposed on the inside layer 211a and formed of a fiber reinforced prepreg (an axial fiber prepreg) in which reinforcing fibers are arranged in the axial direction of the rod pipe 201, and an outside layer 211c disposed on the intermediate layer 211b and formed of a circumferential fiber prepreg.

Also, the fishing line guide 212 formed on the inner wall surface of the main body layer 211 includes a fiber reinforced projection portion 212a including reinforcing fibers, and a resin projection portion 212b including synthetic resin such as the resin forming the prepreg or the like.

As the thermosetting resin of a low temperature setting type forming the main body layer 211, there is used a thermosetting resin having a setting temperature of 110 °C or lower, preferably, in the range of about 70 - 110 °C. In such thermosetting resin, since a difference between the temperature (normal temperature) thereof in the winding operation and the forming temperature thereof is small, influences due to the thermal expansion coefficient of the reinforcing fibers thereof can be reduced.

Also, the main body layer 211 composed of the fiber reinforced prepreg (low temperature setting resin prepreg) including the thermosetting resin of a low temperature setting type can also be combined with an element composed of a fiber reinforced prepreg (high temperature setting resin prepreg) including thermosetting resin of a high temperature setting type. In this case, as a method for manufacturing a rod pipe, in connection with the setting temperature thereof, there are available a method in which the high temperature setting resin prepreg is firstly arranged or wound and the thermosetting resin of a high temperature setting type is caused to harden and, after then, the low temperature setting resin prepreg is arranged or wound and the thermosetting resin of a low temperature setting type is caused to harden; and, a method in which the high temperature setting resin prepreg and low temperature setting resin prepreg are arranged or wound and the thermosetting resin of a low temperature setting type is caused to harden and, after then, the thermosetting resin of a high temperature setting type is caused to harden.

The content of the synthetic resin in the low temperature setting resin prepreg is preferably in the range of 25 - 70% by weight, when the rigidity thereof after formation and the winding operation efficiency are taken into account. Also, when the low temperature setting resin prepreg is used in combination with the high temperature setting resin prepreg, even if a low temperature setting type of thermosetting resin having a relatively high viscosity is used, such high-viscosity low temperature setting thermosetting resin, preferably, may be set higher than the synthetic resin content (in the range of 15 - 35% by weight) of the high temperature setting resin prepreg, with the formability thereof taken into account.

The thickness of the low temperature setting resin prepreg is preferably in the range of 0.01 - 0.08 mm, when the thickness of the rod top portion after formed is taken into consideration. Also, when the low temperature setting resin prepreg is used in combination with the high temperature setting resin prepreg, the thickness of the low temperature setting resin prepreg may be preferably set smaller than the thickness (in the range of 0.05 - 0.20 mm) of the high temperature setting resin prepreg, for the purpose of prevention of occurrence of the bending.

In the arrangement of the main body layer, the ratio of (axial fiber prepreg/circumferential fiber prepreg) of the low temperature setting resin prepreg may be preferably set in the range of 1.0 - 5.0, when the improved rigidity and crushing prevention of the rod pipe are taken into account. Also, when the low temperature setting resin prepreg is used in combination with the high temperature setting resin prepreg, the ratio of the low temperature setting resin prepreg may be preferably set larger than the above-mentioned ratio of the high temperature setting resin prepreg, when the bending prevention is taken into consideration, In this case, the rigidity of the rod pipe can be adjusted by increasing the diameter of the rod pipe. This can sufficiently prevent the rod pipe from being bent.

The tensile elastic modulus of the reinforcing fibers of the low temperature setting resin prepreg is preferably in the range of 1 - 50 ton/mm$^2$, with the flexibility of the rod pipe taken into account. Also, when the low temperature setting resin prepreg is used in combination with the high temperature setting resin prepreg, the tensile elastic modulus of the reinforcing fibers of the low temperature setting resin prepreg may be preferably set smaller than the tensile elastic modulus (24 - 90 ton/mm$^2$) of the reinforcing fibers of the high temperature setting resin prepreg, with the flexibility and strength of the rod pipe taken into consideration.

Also, the glass transition temperature or point of the thermosetting resin of a low temperature setting type in the low temperature setting resin prepreg may be set higher than the setting temperature thereof, for example, on the order of 120 °C, in consideration of the stabilized condition of the formed product, that is, rod pipe with respect to the temperature variations of the luggage compartment of a vehicle or the cargo room of a ship in transportation.

Next, description will be given below of a method for manufacturing a rod pipe in a fishing rod according to the invention with reference to Fig. 9. At first, a mold release agent such as fluorine resin, synthetic wax or the like is coated onto the surface of a mandrel 221. Next, a projection forming tape 222 such as a fluorine tape, a resin tape, a fiber reinforced tape or the like is wound around the surface of the mandrel 221 at an interval corresponding to the width of a projection to be formed. In this case, as the projection forming tape 222, there is used a tape which has a thickness (normally, 0.2 - 1.0 mm) corresponding to the height of the projection.

After then, on top of the above tape 222, there is wound around the mandrel 221 a fishing line guide forming member 223 which is formed of any one of a fiber reinforced prepreg including properly arranged reinforcing fibers impregnated with synthetic resin, a bundle of fibers, a synthetic resin member, a ceramics member, a metal member, and the like. By the way, the winding of the fishing line guide forming member 223 may also be carried out simultaneously with the winding of the projection forming tape 222. Also, when the fishing line guide forming member 223 is formed of the fiber reinforced prepreg, preferably, after the fishing line guide forming member 223 is wound, a fastening tape is wound on top of the fishing line guide forming member 223; after the fiber reinforced prepreg of the fishing line guide forming member 223 is caused to harden, the fastening tape is removed; and, after then, the fiber reinforced prepreg of the main body layer is wound.

Next, on top of the above, there are wound sequentially an inside layer prepreg 224 consisting of a circumferential fiber prepreg, an intermediate layer prepreg 225 consisting of an axial fiber prepreg, and an outside layer prepreg 226 consisting of a circumferential fiber prepreg. As the inside layer prepreg 224, intermediate layer prepreg 225 and outside layer prepreg 226, there is used a low temperature setting resin prepreg having a setting temperature (forming temperature) of 110 °C or lower, preferably, in the range of 70 - 110 °C.

Next, a fastening tape is wound around the above assembly and the above assembly is fastened by the fastening tape and, after then, the assembly is formed at the setting temperature of the thermosetting resin of the low temperature setting resin prepreg. After then, according to an ordinary conventional method, the mandrel 221 is removed, the internally wound projection forming tape 222 is removed, and the externally wound fastening tape is removed from the assembly, which completes the production of the rod pipe.

In the thus produced rod pipe, since a difference between the temperature (normal temperature) thereof in the winding operation and the forming temperature thereof is small, influences due to the thermal expansion coefficient of the reinforcing fibers can be reduced, which in turn prevents the rod pipe from being bent.

In the above-mentioned embodiment, description has been given of a case in which, after the fishing line guide forming member 223 formed of the fiber reinforced prepreg is wound and the fiber reinforced prepreg is hardened, the main body layer 211 is formed. However, this is not limitative but, according to the invention, for example, firstly, the fishing line guide forming member 223 formed of the fiber reinforced prepreg may be wound, a low temperature setting resin prepreg forming the main body layer 211 may be further wound on top of the fishing line guide forming member 223, and the main body layer 211 may be then hardened at the setting temperature (for example, 100 °C) of the thermosetting resin of a low temperature setting type forming the main body layer 211; and, after then, the fishing line guide forming member 223 may be hardened at the setting temperature (for example, 130 °C) of the thermosetting resin of a high temperature setting type forming the main body layer 211.

In the above-mentioned embodiment, as the reinforcing fibers, there can be used carbon fibers, glass fibers, metal fibers, aramido fibers, ceramics fibers or the like. Also, as the synthetic resin, there are available epoxy resin, urethane resin, polyester resin or the like. Especially, as the thermosetting resin of a low temperature setting type, there can be used epoxy resin or the like.

Further, the invention is not limited to the illustrated embodiment but various changes and modifications are possible without departing from the scope of the technological concept thereof. For example, the fiber diameters of the reinforcing fibers, the number of windings of the prepregs, the hardening conditions of the synthetic resin and the like can be changed properly according to cases.

Moreover, in the above-mentioned embodiment, description has been given of a case in which the whole of the main body layer is composed of the low temperature setting resin prepreg. However, this is not limitative but the invention can also apply to a case in which a main body layer is composed of a low temperature setting resin prepreg and a high temperature setting resin prepreg in combination.

As has been described heretofore, according to the fourth embodiment of the invention, there is provided a fishing rod comprises a rod pipe which is produced by winding, as a main body layer thereof, a fiber reinforced prepreg impregnated with synthetic resin having a setting temperature of 110 °C or lower. Thanks to this, the present rod pipe is prevented from being bent. That is, the present fishing rod not only can reduce the possibility of worsening the directional property and stable movement thereof to thereby provide excellent flexibility, but also can show excellent specific strength and rigidity.

⟨Fifth Embodiment⟩

Now, description will be given below in more detail of an intra-line fishing rod of a fifth embodiment according to the invention with reference to the accompanying drawings.

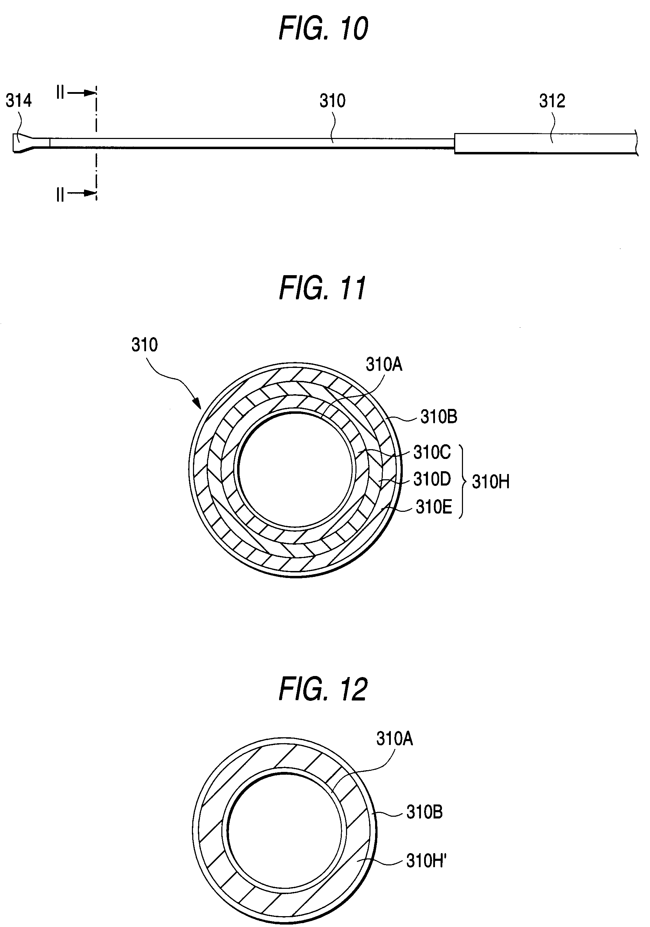

Fig. 10 is a partial view of an embodiment of an intra-line fishing rod according to the invention in which a top rod 310 is joined to a top rod holding rod, and Fig. 11 is an enlarged transverse section view of the front area of the top rod 310, taken along the arrow line B-B shown in Fig. 10. These rod pipes 310 and 312 are respectively formed of synthetic resin such as epoxy resin or the like as the matrix thereof and fiber reinforced plastic reinforced by reinforcing fibers such as carbon fibers or the like and, in Fig. 10, reference character 314 designates a top guide. According to the present invention, at least the front area of the top rod 310, except for the portion of the top guide 314, has such a transverse section structure as shown in Fig. 11.

That is, in the present portion of the top rod 310, between an inside layer 310A and an outside layer 310B in which the reinforcing fibers are directed substantially in the circumferential direction of the top rod 310, there is arranged a main body layer 310H and, in the present embodiment, the main body layer 310H is composed of three layers, namely, 310C, 310D and 310E. In particular, the inside portion of the main body layer 310H consists of the layer 310C in which the reinforcing fibers are directed substantially in the axial direction of the top rod 310. On the other hand, the two outside layers of the main body layer 310H respectively consist of the layer 310D in which the properly arranged reinforcing fibers are inclinedly directed at an inclination angle of about 45 degrees in the positive direction with respect to the axial direction of the top rod 310, and the layer 310E in which the properly arranged reinforcing fibers are inclinedly directed at an inclination angle of about 45 degrees in the negative direction with respect to the axial direction of the top rod 310. However, referring here to the prepreg sheets to be used as the layers 310D and 310E, instead of the two prepreg sheets in which the reinforcing fibers are arranged properly, there also can be used a single prepreg sheet in which the reinforcing fibers are woven to intersect those of the other prepreg sheet.

Although the inside and outside layers 310A and 310B used in the present embodiment are not the essential requirements of the invention, the presence of them provides a reinforcing effect with respect to the crushing and buckling of the top rod 310. Here, four-point bending tests were conducted on both of a rod pipe structure shown in Fig. 11 according to the invention in which the outside layer 310B is excluded, and a rod pipe structure in which the respective layers forming the main body layer 310H are arranged in the order of the layer 310D, layer 310C and layer 310E, while the inside layer 310A is included but the outside layer is excluded. For reference, in both of the two rod pipe structures, there were used carbon fibers as the reinforcing fibers thereof and epoxy resin as the matrix resin thereof. The results of the tests show that the maximum flexure amount of the former structure, that is, the structure according to the invention is 65.5 mm, whereas that of the latter is 37.3 mm; and, as for the bending strength, which is the average value of five test pieces, the former structure provides 44.0 kgf/mm$^2$, while the latter structure provides 32.0 kgf/mm$^2$.

From the test results, it is found that the former structure, which is a structure according to the invention, is capable of great flexure. That is, the present rod pipe having the above structure according to the invention is suitable for a top rod which not only must be tenacious but also can be flexed greatly. Also, since the main body layer 310H includes the reinforcing fibers directed in the inclined direction, the main body layer 310H can stand torsion and, especially, if the reinforcing fibers are directed in a 45-degree direction, then the main body layer 310H can stand torsion more effectively. Further, if the reinforcing fibers are directed in the positive and negative directions such that the inclination angles thereof are symmetrical to each other with respect to the axial direction thereof, then unbalanced flexure, if any, can be prevented.

The top rod area including the main body layer 310H of an intra-line fishing rod according to the invention may cover the whole of the top rod 310, or, may cover only the front area of the top rod 310, for example, the front half section of the top rod 310 (the mounting position of the top guide 314 is not expected to be flexible and, therefore, the top rod 310 can have any structure regardless of the mounting position of the top guide 314).

If the inclination angles of the reinforcing fibers of the respective layers of the main body layer 310H are set greater as they approach outside, as well as if the elastic moduli of the reinforcing fibers are set smaller as they approach outside, then the layers are smaller in rigidity as they approach outside, with the result that the flexure of the main body layer 310H is enhanced effectively. Also, even if the layers are set larger in the elastic modulus as they approach outside, it does not interfere with the property of the main body layer 310H, provided that the outside layer is smaller in the flexure rigidity than the inside layer.

When there are provided the layers 310A and 310B which are directed in the circumferential direction, if the elastic moduli of the reinforcing fibers of these layers are set larger than the elastic moduli of the reinforcing fibers of the main body layer 310H, then the rod pipe is made to stand crushing and buckling.

The above-mentioned embodiment is an example and, according to the invention, the inclination angles of the respective component layers of the main body layer 310H may be ± 30°C, ± 45°C, ± 60°C, or the like in the order of them starting from the inside. In the range of ±,, the layers may be arranged inside or outside.

Further, as the transverse section structure of the top rod which is tenacious and can be flexed greatly, there is also available a structure which is shown in Fig. 12. That is, in this structure, between an inside layer 310A and an outside layer 310B respectively including reinforcing fibers directed substantially in the circumferential direction, there is interposed an intermediate layer 310H' consisting mainly of reinforcing fibers which not only cross inclinedly each other in the positive and negative 45°C directions so that they are symmetrical to each other with respect to the axial direction of the intermediate layer 310H' but also are arranged in such quantities that allow them to be substantially equal to each other in the rigidity.

For the sake of comparison, there is available a comparison structure in which a prepreg sheet forming the outside layer 310B is superimposed on the inside layer 310A, that is, the inside layer 310A is increased in thickness but the outside layer 310B is omitted when compared with the structure shown in Fig. 12. The inventors have conducted four-point tests on both of a rod pipe having the comparison structure excluding the outside layer 310B and a rod pipe having the structure shown in Fig. 12 according to the invention, for comparing the property of the comparison structure with the property of the structure according to the invention. In both of the structures, carbon fibers are used as reinforcing fibers and epoxy resin is used as the matrix resin thereof. The results of the tests show that the maximum flexure amount of the former structure, that is, the structure according to the invention is 82.2 mm, whereas that of the latter or comparison structure is 74.7 mm; and, as for the bending strength, which is the average value of five test pieces, the former structure provides 27.5 $kgf/mm^2$, while the latter structure provides 26.2 $kgf/mm^2$.

Since the tests show that the structure according to the invention is capable of being flexed greatly, the rod pipe having the structure according to the invention is suitable as a top rod which must be tenacious and can be flexed greatly. Here, the inclination angle is not limited to the angle of 45°C. Also, due to the existence of the reinforcing fibers directed in the inclined direction in the intermediate layer 310H', the present structure can stand torsion and, especially, if the reinforcing fibers are directed in the 45°C direction, then the present structure can be made to stand torsion more effectively. Further, because the reinforcing fibers are directed in the positive and negative directions so that the inclination angles thereof can be symmetrical to each other with respect to the axial direction of the structure, unbalanced flexure, if any, can also be prevented.

The rod top area of the structure shown in Fig. 12 according to the invention may cover the whole of the top rod 310, or, may cover only the front area of the top rod 310, for example, the front half section of the top rod 310 (the mounting position of the top guide 314 is not expected to be flexible and, therefore, the top rod 310 can have any structure regardless of the mounting position of the top guide 314).

Also, if the reinforcing fibers of the layers 310A and 310B directed in the circumferential direction of the structure are set larger in the elastic modulus than the reinforcing fibers of the intermediate layer 310H', then the rod pipe having such structure can be made to stand crushing and buckling.

Now, description will be given below of articles that are common to top rods respectively having any one of the structures according to the above-mentioned embodiments. Firstly, when manufacturing a rod, since a mandrel for winding is very small in diameter, it is difficult to wind a sheet-shaped prepreg around the winding mandrel. In this case, it is efficient to use a tape-shaped prepreg for winding.

As a modification, a reinforcing ear sheet with reinforcing fibers directed in the axial direction may be provided in the rear portion of the top rod 310 to thereby enhance the flexure rigidity of the rear portion of the top rod 310, whereas only the top portion of the top rod 310 may be structured flexible to thereby enhance the top flexibility of the top rod.

In order to enhance the flexure property of the top rod 310, as the reinforcing fibers which are used in the main body layer and intermediate layer according to the above-mentioned respective embodiments and are arranged in the axial direction or in the inclined direction, it is preferable to use high-elongation fibers such as flame resisting fibers, low-elasticity carbon fibers or the like, or high-elongation material such as aramido fibers, aramido films or the like.

Also, if the matrix resin is formed of high-elongation resin such as thermoplastic resin, rubber denatured epoxy resin or the like, it is possible to prevent interfacial peeling between the reinforcing fibers and matrix resin. Further, if the high-elongation resin such as the rubber denatured epoxy resin or the like is coated on the surface of the reinforcing fibers in a very thin film, then there can be produced a buffering action against not only the deformation of the matrix resin but also the shifting and deforming force that is produced in the boundary between the matrix resin and reinforcing fibers, thereby being able to make the rod pipe difficult to be broken.

As can be understood clearly from the foregoing description, according to the invention, it is possible to provide an intra-line fishing rod including a rod top area which is tenacious, can provide a delicate flexibility and can be flexed greatly.

〈Sixth Embodiment〉

Now, description will be given below in detail of a sixth embodiment of a rod pipe for use in a fishing rod according to the invention with reference to the accompanying drawings.

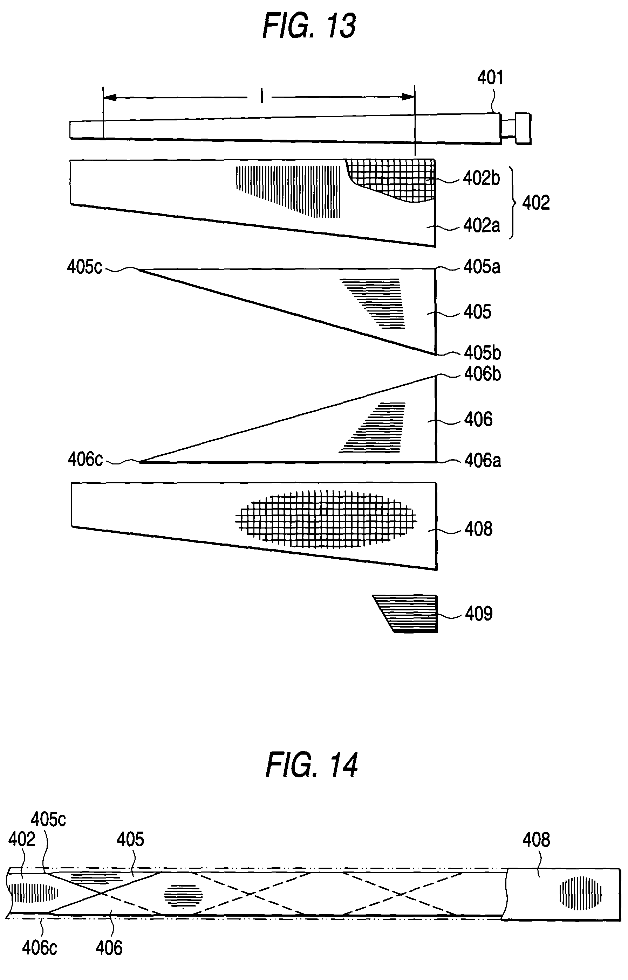

Fig. 13 shows an example of arrangement of prepreg sheets to be wound around a mandrel 401. To manufacture a rod pipe for use in a fishing rod, according to a normal method, a main body prepreg 402, one set of auxiliary prepregs 405, 406, a main body prepreg 408, and an auxiliary prepreg 409 serving as a joining portion are wound around the mandrel 101 in this order in such a manner that they are superimposed on top of another; a cellophane tape is wound on these prepregs so that the prepregs can be stabilized by the tape; after they are stabilized, the prepregs are thermally treated in a heating furnace so that the synthetic resin thereof can be thermally hardened; the prepregs and synthetic resin are then cooled; and, after then, there may be executed necessary steps, that is, the mandrel 401 is removed, the cellophane tape is peeled off, the thermally treated and cooled prepregs and resin are polished, the thus polished product is painted, and the like. Here, a winding portion shown by the length l of the mandrel 401 is the portion that is actually used as a rod pipe, while the other winding portions are cutting margins.

The main body prepreg 402, which provides the inner-most layer side of the rod pipe, is cut with respect to the mandrel 401 in such a manner that the number of windings (1- to 2-ply windings) on the leading end side of the rod pipe is equal to the number of windings on the base end side thereof. And, the main body prepreg 402 is structured in such a manner that carbon fibers are arranged in the circumferential direction of the rod pipe and a prepreg sheet 402a having a thickness of 0.1 mm or less is backed with a woven cloth 402b having a thickness of 0.03 mm or less such as a glass scrim sheet or the like.

The two auxiliary prepregs 405 and 406 are respectively formed in a right triangle shape so that they can be normally wound around the mandrel 401 1- to 2-ply on the base end side of the rod pipe and 0-ply on the leading end side thereof, while both of them are cut perfectly in the same shape. Also, the two auxiliary prepregs 405 and 406 are respectively structured such that carbon fibers are arranged in the axial direction of the rod pipe and the thickness thereof is 0.08 mm or less, preferably, 0.06 or less. In this case, a difference between the thicknesses of the two auxiliary prepregs 405 and 406 may be ± 0.06 mm or less, preferably, ± 0.04 mm or less; and, most preferably, the two auxiliary prepregs 405 and 406 may be identical in thickness with each other. Further, in order to prevent the main body fibers from meandering, the two auxiliary prepregs 405 and 406 may have a thickness smaller than that of the main body prepreg 402. Still further, in order to prevent the movement of the fibers in the rod pipe forming process to thereby make it difficult for the bending to occur therein, the average synthetic resin impregnation amount of the auxiliary prepregs 405 and 406 may be preferably set lower than the synthetic resin impregnation amount of the main body prepreg 402. Concretely, the synthetic resin impregnation amount of the auxiliary prepregs 405 and 406 is preferably 15 - 55 % by weight. However, the synthetic resin impregnation amount of the auxiliary prepregs 405 and 406 can be used in 55 % by weight or more.

The two auxiliary prepregs 405 and 406 are structured such that the respective inclined portions thereof are opposed to each other, that is, they are wound around the mandrel 401 in such a manner that the inclined portions thereof are opposed to each other. In this case, the two auxiliary prepregs 405 and 406 may be wound around the mandrel 401 in such a manner that they are overlapped on each other in part; and, most preferably, they may be wound around the mandrel 401 in such a manner that the vertex 405a of the auxiliary prepreg 405 is matched to the vertex 406b of the auxiliary prepreg 406 and the vertex 405b of the auxiliary prepreg 405 is matched to the vertex 406a of the auxiliary prepreg 406 on the base end side of the rod pipe.

The main body prepreg 408, which serves as the outer-most layer of the rod pipe, is cut in such a manner that it can be wound around the mandrel 401 in the same number of windings (1- to 2-ply windings) on both of the leading end and base end sides of the rod pipe, while the main body prepreg 408 is formed of a glass scrim sheet having a thickness of 0.1 mm or less. And, the auxiliary prepreg 409 serving as a joining portion with carbon fibers arranged in the axial direction of the rod pipe is then wound around once (1-ply winding) on the base end portion of the outer layer of the main body prepreg 408.

By the way, the auxiliary prepregs 405 and 406 with the inclined portions thereof opposed to each other, as in the present embodiment, may be preferably provided as the intermediate layers of the rod pipe This is because the outer and inner layer sides of the rod pipe are easily subject to the influences of the bend or curve of the rod pipe.

Now, in Fig. 14, there is shown the structure of the rod pipe which is formed according to the arrangement of the prepreg sheets shown in Fig. 13. As described above, one set of auxiliary prepregs 405 and 406 are identical in shape and structure with each other, while they are wound around the mandrel 401 in such a manner that their inclined portions are opposed to each other and the two auxiliary prepregs 405 and 406 are accurately superimposed on top of each other. Thanks to this, the two auxiliary prepregs 405 and 406 can be wound from the two directions spirally and symmetrically. Also, the respective leading end positions 405c and 406c of the two auxiliary prepregs 405 and 406 are identical with each other in the axial direction of the rod pipe.

As described above, when an auxiliary prepreg is wound in a spiral manner, there is produced a thickness difference in the rod pipe, thereby causing a difference between the internal stresses which are produced due to the temperature difference in the cooling step to be executed after the rod pipe is formed by heating. This internal stress difference in turn causes the rod pipe itself to be curved in a bow shape or to be bent. However, there is provided another auxiliary prepreg which causes such factor, and these two auxiliary prepregs are wound around the mandrel in such a manner that their inclined portions are opposed to each other and the two auxiliary prepregs are accurately superimposed on top of each other. That is, such provision and winding of the latter auxiliary prepreg can cancel the bending factor of the former auxiliary prepreg wound in the above-mentioned spiral manner. This can prevent the finally formed rod pipe from being curved or bent.

⟨Seventh Embodiment⟩

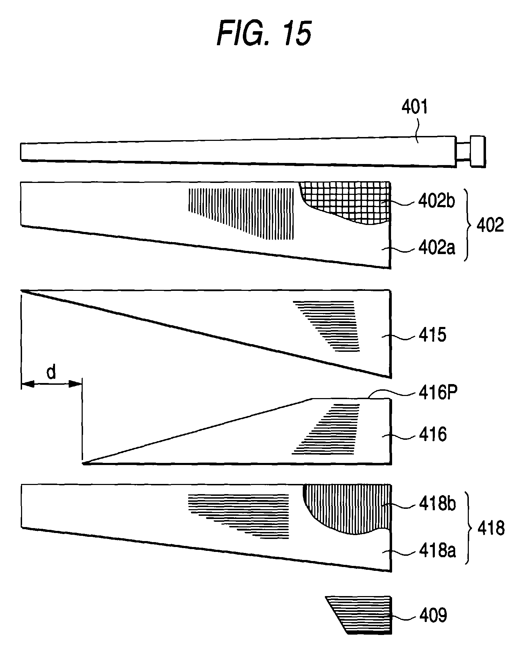

Now, Fig. 15 shows a seventh embodiment of a rod pipe for use in a fishing rod according to the invention, in which two sheets respectively formed of a set of auxiliary prepregs are modified in shape. As described before, preferably, the respective auxiliary prepregs may be identical in shape and structure with each other. However, as will be described below in detail, the two auxiliary prepregs may also be slightly different in shape from each other.

As shown in Fig. 15, the two auxiliary prepregs 415 and 416 may also be slightly different from each other in the axial length thereof. In this case, when a difference between the lengths of the two auxiliary prepregs is expressed as d, the allowable range of d, in which there is obtained the effect that allows the above-mentioned bending factors to cancel each other , is ± 25% or less with respect to the length of the long auxiliary prepreg 415.

The two auxiliary prepregs 415 and 416 may not be formed in an accurate right-triangle shape but, like the auxiliary prepreg 416 shown in Fig. 15, they may also have a trapezoidal shape in which a parallel portion 416p is formed in part. Here, with use of such structure, on the base end side of the rod pipe, the numbers of windings of the two auxiliary prepregs 415 and 416 are different from each other. However, a difference between their winding numbers may be preferably less than 1-ply winding.

That is, even when the two auxiliary prepregs 415 and 416 are slightly different in shape from each other in this manner, if they are wound from both directions in a spiral manner with the respective inclined portions of the two auxiliary prepregs 415 and 416 opposed to each other, their respective bending factors can cancel each other. More preferably, although not shown, the shape of the auxiliary prepreg 415 may be identical with that of the auxiliary prepreg 416.

Also, a main body prepreg 418, which is disposed on the outer-most layer side of the present embodiment, is structured in such a manner that a prepreg sheet 418a with carbon fibers arranged in the axial direction of the rod pipe and a prepreg sheet 418b with carbon fibers arranged in the circumferential direction of the rod pipe are superimposed on top of each other. In this manner, the structure of the main body prepreg can be changed variously.

⟨Eighth Embodiment⟩

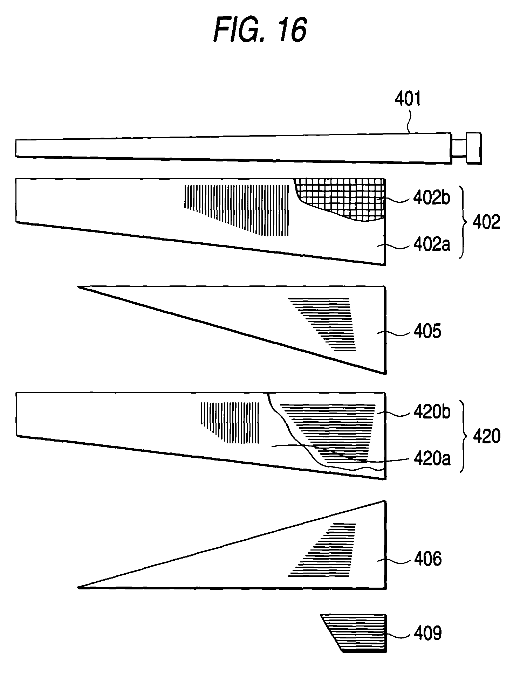

Now, Fig. 16 shows an eighth embodiment of a rod pipe for use in a fishing rod according to the invention, in which a main body prepreg 420 is interposed between one set of auxiliary prepregs 405 and 406 in the sixth embodiment shown in Fig. 13. The auxiliary prepregs 405 and 406, as shown in Fig. 13, may be preferably wound in such a manner that they are superimposed on top of each other. However, this is not limitative but, for example, as shown in the present embodiment, the main body prepreg 420 may be interposed between the two auxiliary prepregs 405 and 406.

Here, the structure of the main body prepreg to be interposed between the two auxiliary prepregs 405 and 406 can be changed variously. In the present embodiment, the main body prepreg 420 is structured in such a manner that a prepreg sheet 420a with carbon fibers arranged in the circumferential direction of the rod pipe and a prepreg sheet 420b with carbon fibers arranged in the axial direction of the rod pipe are superimposed on top of each other.

In this manner, even if one set of auxiliary prepregs 405 and 406 are not superimposed on top of each other, since they are eventually wound from the two directions in a spiral manner, the bending factors of the respective auxiliary prepregs 405 and 406 can cancel each other.

As has been described heretofore, according to the sixth to eighth embodiments of the invention, since one set of substantially right-triangle-shaped auxiliary prepregs forming a rod pipe are wound from both directions in a spiral manner, when the rod pipe is formed, the influences of bend and curve caused by variations in the thickness of the rod pipe are allowed to cancel each other, with the result that the rod pipe can be prevented from being curved in a bow shape or bent as a whole. Also, due to use of such auxiliary prepregs, it is possible to provide a rod pipe which is flexible or small in rigidity on the leading end side thereof, hard or large in rigidity on the base end side thereof, and is improved in the whole balance thereof as well as in the strength balance thereof.

The sixth to eighth embodiments of the present invention is defined by the shape, arrangement condition and winding condition of the auxiliary prepreg sheets which can provide the rod pipe to be formed with the property due to which the rigidity of the rod pipe decreases from the base end side thereof to the leading end side thereof. Therefore, with respect to other prepreg sheets (such as a main body prepreg sheet and the like) than the auxiliary prepreg sheets that provide the above-mentioned property, the structures thereof including the arrangement directions and kinds of the reinforcing fibers, the amounts of impregnation of the resin, the thicknesses of the prepreg sheets, and the like are not limited at all but can be changed variously according to the uses of fishing rods, the properties required for such uses, and the like.

Also, the above-mentioned auxiliary prepreg sheets are provided at least in one set and they are respectively formed in a substantially right-angle triangle shape so that they can provide the above-mentioned property. In this case, due to the fact that the auxiliary prepreg sheets are respectively formed in a substantially right-angle triangle shape, the reinforcing fibers of the rod pipe are so arranged as to extend in the axial direction of the rod pipe, which makes it possible not only to enhance the bending elasticity of the rod pipe but also to prevent the rod pipe from being bent spirally. And, since such auxiliary prepreg sheets are provided in one set and they are wound around the mandrel in such a manner that the respective inclined portions thereof are opposed to each other, the auxiliary prepreg sheets can be wound in spiral shapes which are symmetrical to each other and are directed in the mutually opposite directions. By the way, the term "substantially right triangle shape" includes not only an accurate right angle but also such a shape that allows the above-mentioned fibers to extend in the axial direction of the rod pipe, for example, a trapezoidal shape including a parallel portion in part thereof. Also, one set of auxiliary prepreg sheets may be wound in such a manner that they have been previously superimposed on top of each other, or they may be wound separately one by one. Therefore, the main body prepreg may also be interposed between the respective auxiliary prepreg sheets.

Most preferably, one set of auxiliary prepreg sheets may be formed in shape and structure identically with each other and they are wound around the mandrel in such a manner that they may be superimposed on top of each other. In this case, the respective spiral winding conditions thereof can be made accurately symmetrical to each other, due to which the bending factors caused by the spirally shaped windings of the respective auxiliary prepreg sheets are allowed to cancel each other. However, one set of auxiliary prepreg sheets may also be formed in such a manner that the lengths thereof in the axial direction thereof are different from each other or the shapes thereof are slightly different from each other. That is, if the respective inclined portions of the two auxiliary prepreg sheets are so arranged as to be opposed to each other and the spiral directions thereof when they are wound are opposite to each other, then the bending factors can cancel each other. This is the reason why the shapes of the two auxiliary prepreg sheets may be slightly different from each other.

**Claims**

1. A pipe-shaped body comprising: a low-elasticity fiber reinforced prepreg formed of reinforcing fibers having a tensile elasticity modulus of 0.5 - 5 $ton/mm^2$ impregnated with synthetic resin.

2. A pipe-shaped body according to claim 1, wherein said low-elasticity fiber reinforced prepreg is formed of reinforcing fibers having a tensile elasticity modulus of 0.5 - 2.5 $ton/mm^2$.

3. A pipe-shaped body according to claim 1, further comprising at least one of fiber reinforced prepregs formed of reinforcing fibers impregnated with synthetic resin.

4. A pipe-shaped body according to claim 3, wherein said low-elasticity fiber reinforced prepreg is wound around an outer-most layer of said pipe-shaped body.

5. A rod pipe for an intra-line fishing rod comprising:

at least three prepregs composed of reinforcing fibers impregnated with synthetic resin, said prepregs including a first prepreg wound from the substantially leading end thereof to the substantially rear end thereof, a second prepreg wound backward from the substantially leading end thereof, which is lower in bending elastic modulus than said first prepreg, and a third prepreg wound forward from said substantially rear end thereof, which is higher in bending elastic modulus than said first prepreg,

wherein said rod pipe has a first area from the substantially leading end thereof to a hole position forming a fishing line introduction part provided at a given position thereof, and said first area has a second area which a second layer wound by said second prepreg is larger in thickness than a first layer wound by said first prepreg which overlaps at the same position as said second prepreg and a third area which is other than said second area, and further wherein

a length of said second area is set in the range of 30 - 70 % of the length of said first area; in said third area, the second layer of said second prepreg substantially decreases backward from the leading end side and a third layer wound by said third prepreg substantially increases backward from the leading end side, and the average thickness of said second area is set equal to or smaller than the average thickness of said third area.

6. A rod pipe for a fishing rod comprising: a first fiber reinforced prepreg formed of reinforcing fibers impregnated with synthetic resin having a setting temperature of 110°C or lower.

7. A rod pipe for a fishing rod according to cliam 6, wherein the setting temperature of said synthetic resin is in the range of 70 - 100°C.

8. A rod pipe for a fishing rod according to claim 6, wherein the reinforcing fibers of said first fiber reinforced prepreg has a tensile elasticity modulus of 1 - 50 ton/mm$^2$.

9. A rod pipe for a fishing rod according to claim 8, further comprising: a second fiber reinforced prepreg formed of reinforcing fibers which has a tensile elasticity modulus of 24 - 90 ton/mm$^2$ impregnated with synthetic resin having a setting temperature of 120 - 200°C,

wherein the reinforcing fibers of said first fiber reinforced prepreg is lower in the elasticity modulus than that of said second fiber reinforced prepreg.

10. A rod pipe for an intra-line fishing rod wherein a rod top area which extends backward from a leading end of said rod pipe has a plurality of layers formed of reinforcing fibers impregnated with synthetic resin, and said reinforcing fibers of said each layer are directed in a direction having the larger angle with respect to an axial direction of said rod pipe than said reinforcing fibers of an inside layer of said each layer.

11. A rod pipe for an intra-line fishing rod wherein a rod top area which extends backward from a leasing end of said rod pipe has at least three layers formed of reinforcing fibers impregnated with synthetic resin, and said reinforcing fibers of inside and outside layers which are wound on a inner and outer peripheries of said rod pipe are directed substantially in a circumferential direction of said rod pipe, and said reinforcing fibers of an intermediate layer arranged between said inside and outside layers are so directed as to cross each other in such directions that allow said reinforcing fibers to be substantially symmetrical to each other with respect to the axial direction of said rod pipe and arranged in such quantity that allows said mutually crossing reinforcing fibers to be substantially equal in rigidity to each other.

12. A rod pipe for a fishing rod comprising: a plurality of prepreg sheets each formed of reinforcing fibers impregnated with synthetic resin,

wherein said plurality of prepreg sheets include one set of substantially right-triangle-shaped auxiliary prepreg sheets, and further wherein said one set of auxiliary prepreg sheets are structured in such a manner that an inclined portions thereof are disposed so as to oppose to each other and said auxiliary prepreg sheets are wound in such a manner that said auxiliary prepreg sheets provide respective spiral shapes extending in the mutually opposite direction.

13. A rod pipe for a fishing rod according to claim 12, wherein inclined angles of said inclined portions are equal to each other.

14. A rod pipe for a fishing rod according to claim 12, wherein one sides of said one set of auxiliary prepreg sheets are wound around an base portion of said rod pipe.

*FIG. 1*

## FIG. 3

## FIG. 4

## FIG. 5

# FIG. 6

# FIG. 7

## FIG. 8

## FIG. 9

## FIG. 10

314  II→  310  312

II→

## FIG. 11

310  310A
310B
310C ⎫
310D ⎬ 310H
310E ⎭

## FIG. 12

310A
310B
310H'

## FIG. 13

## FIG. 14

## FIG. 15

## FIG. 16

401

402b
402
402a

405

420b
420
420a

406

409